# EUROPÄISCHE PATENTSCHRIFT

(11) **EP 3 705 009 B1**
(45) Veröffentlichungstag und Bekanntmachung des Hinweises auf die Patenterteilung: **10.12.2025**
(21) Anmeldenummer: 20161846.9
(22) Anmeldetag: 09.03.2020
(51) Int. Cl.: A47K 3/28, A47K 3/30, A47K 10/10, F16B 2/06, F16B 5/06, A47K 1/08, A47K 3/00, A47B 96/02

(54) **RAUMTRENNVORRICHTUNG, INSBESONDERE DUSCHABTRENNUNG**
ROOM PARTITION, IN PARTICULAR SHOWER PARTITION
SÉPARATEUR D'ESPACE, EN PARTICULIER SÉPARATION DE DOUCHE

(30) Priorität: 08.03.2019 DE 202019101308 U
(43) Veröffentlichungstag der Anmeldung: 09.09.2020
(60) Teilanmeldung: 24172345.1
(73) Patentinhaber: Hüppe GmbH, 26160 Bad Zwischenahn (DE)
(72) Erfinder: MARTINEZ RODRIGUEZ, David, 08030 Barcelona (ES)
(74) Vertreter: Eisenführ Speiser

(56) Entgegenhaltungen:
- DE-U1- 202004 018 077
- DE-U1- 202017 102 988
- GB-A- 2 490 182
- GB-A- 2 507 517
- US-B1- 6 588 030
- US-B1- 9 958 112

## Beschreibung

Die vorliegende Erfindung betrifft eine Raumtrennvorrichtung, insbesondere Duschabtrennung, mit einem Raumtrennsegment, und einer mit dem Raumtrennsegment koppelbaren Ablage.

Raumtrennvorrichtungen der eingangs genannten Art werden beispielsweise als Duschabtrennungen im Bad- und Sanitärbereich eingesetzt. Eine an einem Kunststoff- oder Glassegment befestigte Ablage wird genutzt, um Sanitärartikel des täglichen Gebrauchs wie beispielsweise Duschgele oder Shampoos darauf abzustellen.

Herkömmlich ist eine solche Raumtrennvorrichtung mit einer Ablage versehen, die mittels einer Schraubverbindung an dem Raumtrennsegment befestigt ist. Des Weiteren werden Ablagen innerhalb einer Duschkabine mittels einer Schraub- oder Klebeverbindung an zumeist geflieste Raumwände befestigt. Ein Nachteil einer Schraubverbindung besteht darin, dass das Raumtrennsegment aufgrund des für die Schraubverbindung benötigten Bohrlochs geschwächt oder bei der Herstellung beschädigt wird. Insbesondere aus Echtglas bestehende Raumtrennsegmente neigen zum Sprödbruch oder Abplatzen von Teilen. In gleicher Weise wird auch eine geflieste Raumwand durch Bohrlöcher oder Klebstoffrückstände abgewertet. Es besteht dementsprechend Bedarf einer Lösung zur Beseitigung dieser Nachteile.

DE 20 2004 018077 U1 zeigt eine Ablage, die mit einer Klemmvorrichtung oben auf ein Raumtrennsegment montiert wird.

Aufgabe der vorliegenden Erfindung ist es daher, eine Raumtrennvorrichtung, insbesondere Duschabtrennung bereitzustellen, die die beschriebenen Nachteile des Standes der Technik weitgehend vermeidet und eine einfach herzustellende, zuverlässige Kopplung einer Ablage an einem Raumtrennsegment, insbesondere aus Glas, ermöglicht.

Die Erfindung löst die Aufgabe durch eine Raumtrennvorrichtung nach Anspruch 1. Erfindungsgemäß wird in vorteilhafter Weise eine kraftschlüssige, klemmende Verbindung zum Befestigen einer Ablage an einem Raumtrennsegment unter Vermeidung einer konstruktiven Veränderung des Raumtrennsegmentes vorgeschlagen. Die Herstellung von Bohrungen in dem Raumtrennsegment, insbesondere einer Glas- oder Kunststoffscheibe wird erfindungsgemäß vermieden, wodurch der Arbeitsschritt des Bohrens eingespart und das Risiko von Beschädigungen bei der Herstellung oder Montage vermieden wird. Aufgrund der erfindungsgemäßen Klemmvorrichtung ist die Position der hieran gekoppelten Ablage bei der Montage flexibel einstellbar und auch anschließend veränderbar; zumal in der heutigen Zeit besonderer Wert auf Flexibilität gelegt wird, um die Anforderungen oder Wünsche der Kunden und des Fachhandels und des Handwerks zu erfüllen. So kann beispielsweise die Höhe der Ablage nach individuellem Wunsch gewählt und auch nachträglich verändert werden, ohne dass neue Bohrungen hergestellt werden müssten. Beispielsweise ist denkbar, dass eine große Person die Ablage auf einer höheren Position befestigt wünscht als eine kleine Person. Der jeweiligen Lebenssituation entsprechend ist ein Demontieren sowie ein anschließendes Montieren der Ablage an einer neuen vorteilhafteren Position mit der vorliegenden Erfindung besonders einfach.

In einer bevorzugten Ausführungsform ist die Erfindung der eingangs genannten Art dadurch gekennzeichnet, dass die Klemmvorrichtung einen ersten Klemmabschnitt und beabstandet dazu einen zweiten Klemmabschnitt aufweist, die einen solchen Abstand zueinander aufweisen, dass das Raumtrennsegment in den Zwischenraum zwischen den ersten und zweiten Klemmabschnitt einführbar ist. Eine solche Anordnung ermöglicht vor allem eine einfache Montage der Klemmvorrichtung an das Raumtrennsegment. Der bereits vorgegebene Abstand erlaubt ein einfaches Anordnen des Raumtrennsegments zwischen den Klemmabschnitten der Klemmvorrichtung, sodass anschließend mit nur geringem Arbeitsaufwand die Klemmkraft aufgebracht werden kann.

Gemäß einer bevorzugten Ausführungsform wird vorgeschlagen, dass der erste Klemmabschnitt und der zweite Klemmabschnitt mittels eines Verbindungsabschnitts miteinander verbunden sind, wobei vorzugsweise der Verbindungsabschnitt einen Anschlag für das Raumtrennsegment bildet. Der Verbindungsabschnitt ermöglicht in einfacher Weise ein Übertragen der Klemmkräfte. Zusätzlich dient dieser als Anschlag für das Raumtrennsegment während der Montage, wodurch die gewünschte Position der Ablage an dem Raumtrennsegment einfach erreicht und eine optimale Ausrichtung der Klemmvorrichtung an dem Raumtrennsegment ermöglicht wird und infolgedessen eine optimale Kraftübertragung stattfinden kann.

Besonders bevorzugt ist benachbart zu dem ersten und dem zweiten Klemmabschnitt ein Befestigungsabschnitt zum Befestigen der Klemmvorrichtung an der Ablage vorgesehen. Dieser dient vor allem dem Zweck einer positionsgenauen Montage der Ablage an der Klemmvorrichtung.

Vorzugsweise ist die Klemmvorrichtung - im montierten Zustand - an der Unterseite der Ablage mittels des Befestigungsabschnitts befestigt. Dies ist vor allem aus ästhetischen Gründen vorteilhaft, da man den Befestigungsabschnitt so kaum sieht. Zur weiteren Optimierung weist die Ablage an ihrer Unterseite eine Ausnehmung auf, in die der der Befestigungsabschnitt der Klemmvorrichtung teilweise einsetzbar ist. Hierdurch wird eine positionsgenaue sowie stabile Befestigung gewährleistet.

Gemäß einer bevorzugten Ausführungsform weist der Befestigungsabschnitt zwei beabstandete Schenkel auf, zwischen denen das Raumtrennsegment im montierten Zustand angeordnet ist. Eine solche Ausführungsform bewirkt neben einer günstigen Lastverteilung vor allem eine Erhöhung der Stabilität der Ablage an der Klemmvorrichtung an dem Raumtrennsegment.

Vorzugsweise weist jeder Schenkel des Befestigungsabschnitts einen flanschartigen Vorsprung auf, der mittels Schraubverbindung an der Ablage befestigbar ist und wenigstens teilweise, vorzugsweise vollständig in die Ausnehmung der Ablage einsetzbar ist. Hierdurch wird eine einfache, positionsgenaue sowie stabile Befestigung der Ablage an der Klemmvorrichtung gewährleistet.

Besonders bevorzugt sind der Befestigungsabschnitt und der erste und zweite Klemmabschnitt im Wesentlichen rechtwinklig zueinander angeordnet. Eine solche Ausführungsform bewirkt eine günstige Lastverteilung aufgrund einer vorzugsweise im Wesentlichen L-förmigen Ausbildung der Schenkel in Kombination mit den Klemmabschnitten.

Die Erfindung sieht vor, dass die Ablage einen (ersten) schlitzförmigen Ausschnitt aufweist, welcher dazu eingerichtet ist, das Raumtrennsegment aufzunehmen. Der Ausschnitt ermöglicht zum einen ein einfaches Einführen während der Montage und erlaubt, dass die Ablage auf beiden Seiten der Raumtrennvorrichtung genutzt werden kann. Zum anderen bewirkt der Ausschnitt eine zusätzliche Stabilität bei der Befestigung, da ein Verkippen der Ablage verhindert wird.

Gemäß einer bevorzugten Weiterbildung der Erfindung weist der schlitzförmige Ausschnitt mindestens teilweise entlang seiner innenliegenden Kontur eine Schutzschicht auf, die im montierten Zustand in Kontakt mit dem Raumtrennsegment steht. Die Schutzschicht wirkt sich positiv schlag-, stoß- und vibrationsdämpfend aus. Des Weiteren ist die Schutzschicht in einer bevorzugten Ausführungsform zusätzlich als eine Art Dichtungslippe ausgebildet und stellt dadurch einen Überlaufschutz an der Grenzfläche zwischen Ablage und Raumtrennsegment dar. Bevorzugt besteht die Schutzschicht aus einem elastischen, vorzugsweise gummiähnlichen Material. Neben einer schlag-, stoß- und vibrationsdämpfenden Wirkung wird mit einem hochelastischen, vorzugsweise gummiähnlichen Material auch eine Reibungserhöhung erzielt. Die Reibungserhöhung dient dem Zweck, eine zusätzliche Haltekraft entlang der Kontaktfläche zwischen Ablage und Raumtrennsegment auszuüben.

In einer bevorzugten Ausgestaltung ist die Ablage als vorzugsweise einstückiges Brett ausgebildet. Dies ist neben ästhetischen Gründen vor allem durch einen verringerten Montageaufwand begründet. In einer alternativen Ausgestaltung der Erfindung ist denkbar, dass die Ablage als Korb ausgebildet ist.

Besonders bevorzugt weist die Ablage einen weiteren (zweiten) schlitzförmigen Ausschnitt auf, sodass an der Ablage ein Haltesegment ausbildet ist, welches vorzugsweise als Handtuchhalter eingerichtet ist. Die Ausbildung des Haltesegments an einem freien Ende einer Duschkabine bringt den Vorteil, dass im Gegensatz zu herkömmlich rein innenliegend in Duschkabinen montierbaren Ablagen, ein zweckdienlicher Handtuchhalter in sinnhafterweise mit einer Ablage kombinierbar ist.

In einer bevorzugten Ausgestaltung sind der erste schlitzförmige Ausschnitt und der zweite schlitzförmige Ausschnitt in einem Winkel, vorzugsweise in einem Bereich zwischen 80 und 110°, besonders bevorzugt in einem Winkel von etwa 90° zueinander angeordnet. Eine im wesentlichen rechtwinklige Anordnung hat den Vorteil, dass ein Benutzer des Haltesegments besonders einfach an das gehaltene Objekt, vorzugsweise ein Handtuch gelangen kann. Des Weiteren gewährleistet diese Weitebildungsform der Erfindung eine optimale Raumnutzung bei optimierter Ablagefläche.

In einer weiteren besonderen Ausführungsform weist mindestens ein Klemmabschnitt mindestens ein Klemmmittel zum Aufbringen einer Klemmkraft auf das Raumtrennsegment auf, welches vorzugsweise als Schraube ausgebildet ist und mit einem an dem Klemmabschnitt ausgebildeten Gewinde zusammenwirkt. Das Einstellen einer Klemmkraft über ein Gewinde stellt eine einfache und vor allem präzise Möglichkeit dar, eine solche Klemmkraft aufzubringen, beispielsweise mithilfe eines Drehmomentschlüssels, ohne dass die Klemmkraft zu groß wird und möglicherweise das Raumtrennsegment beschädigt.

In einer bevorzugten Ausgestaltung weist das Klemmmittel ein vorzugsweise scheibenförmiges druckstabiles Kontaktelement auf, welches mit dem Raumtrennsegment im montierten Zustand in Kontakt steht. Die Krafteinleitung und -übertragung eines schraubenförmigen Klemmmittels resultiert in einer weitestgehend punktförmigen Druckkraft auf das Raumtrennsegment. Der Einsatz eines solchen beschriebenen Kontaktelementes sorgt für eine Verlagerung der Druckspannung und für eine Verteilung der Spannungsspitzen. Somit ist eine schonende Krafteinleitung auch auf bruchempfindliche Materialien möglich.

Eine weitere Ausführungsform weist eine an einem Klemmabschnitt befestigte Abdeckung zum Abschirmen der Klemmmittel vor äußeren Einflüssen auf. Diese ist zum einen notwendig für einen optisch gleichmäßigen ästhetisch hochwertigen Gesamteindruck der Vorrichtung, zum anderen wird somit eine Belastung durch Umgebungseinflüsse, beispielsweise durch einen direkten Wasserstrahl auf die Klemmmittel, verringert.

Gemäß einer bevorzugten Ausführungsform ist an mindestens einem Klemmabschnitt eine Schutzschicht angeordnet, welche im montierten Zustand mit dem Raumtrennsegment in Kontakt steht und vorzugsweise aus einem reibungserhöhenden Material besteht. Die Krafteinleitung des Klemmabschnitts erfolgt über die Schutzschicht, die zum einen schlag- , stoß- und vibrationsdämpfend wirkt und zum anderen Spannungsspitzen aufnehmen und verteilen kann.

Bevorzugt ist das Raumtrennsegment eine Glaswand ist, wobei die Glaswand an einem freistehenden Ende mit der Ablage gekoppelt ist.

Die Erfindung wird nachstehend anhand eines bevorzugten Ausführungsbeispiels einer als Duschabtrennung ausgebildeten Raumtrennvorrichtung anhand der Figuren beschrieben. Diese zeigen:
- Fig.1:: eine perspektivische Ansicht einer Raumtrennvorrichtung
- Fig. 2:: eine Seitenansicht einer an eine Klemmvorrichtung befestigte Ablage
- Fig. 3:: eine Schnittdarstellung durch eine an eine Klemmvorrichtung befestigte Ablage (Schnitt A-A Fig. 2)
- Fig. 4 u. 5:: eine perspektivische Ansicht einer an eine Klemmvorrichtung befestigte Ablage
- Fig. 6:: eine Draufsicht auf eine Ablage

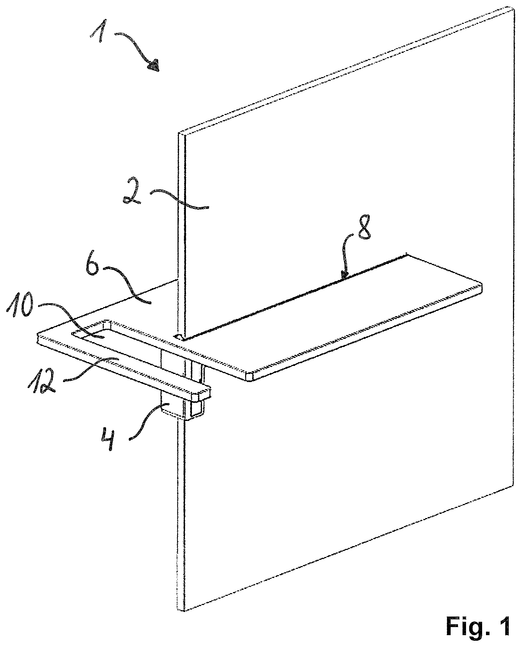

Die in Figur 1 gezeigte Raumtrennvorrichtung 1 weist ein Raumtrennsegment 2 in Form einer im Wesentlichen rechteckigen Scheibe aus Glas oder Kunststoff und eine an das Raumtrennsegment 2 mit einer Klemmvorrichtung 4 befestigte Ablage 6 auf, auf welcher Objekte abgelegt oder gestellt werden können. Vorzugsweise ist die Ablage 6 in Form eines einstückigen Brettes oder einer Platte oder einer Schale aus verschiedenen Materialien, wie z.B. Kunststoff, Metall, beschichtetem Holz, ausgebildet. Die Ablage 6 ist im Betrieb im montierten Zustand im Wesentlichen horizontal angeordnet und im Wesentlichen rechtwinklig zu dem im Betrieb vertikal angeordneten Raumtrennsegment 2 angeordnet.

Die Ablage 6 weist einen ersten schlitzförmigen Ausschnitt 8 auf, welcher insbesondere eine Breite aufweist, die mindestens der Dicke des Raumtrennsegmentes 2 entspricht und eine Länge, die ein Vielfaches seiner Breite entspricht. Der erste schlitzförmige Ausschnitt 8 ist dazu eingerichtet, das Raumtrennsegment 2 aufzunehmen und eine Führung für das Raumtrennsegment 2 während der Montage auszubilden. Zusätzlich kann der schlitzförmige Ausschnitt 8 bzw. die Dicke des Raumtrennsegments 2 so gewählt werden, dass die Ablage 6 zusätzlich in ihrer rechtwinkligen Position relativ zu dem Raumtrennsegment 2 gehalten oder gestützt wird.

An einem Endbereich der Ablage 6 befindet sich ein zweiter insbesondere schlitzförmiger Ausschnitt 10, welcher in dieser Ausbildung ein Haltesegment 12 bildet und dieses vorzugsweise als Handtuchhalter eingerichtet ist. Im Ausführungsbeispiel ist der schlitzförmige Ausschnitt 10 im Wesentlichen rechteckig, es sind aber auch andere Formen denkbar, beispielsweise gebogene oder teilweise gekrümmte Formen. Unterhalb der Ablage 6 ist die Klemmvorrichtung 4 angeordnet, die dazu ausgebildet ist eine Klemmkraft zum Fixieren und Halten der Ablage 6 an dem Raumtrennsegment 2 bereitzustellen, welche vorzugsweise an einem seitlichen Endbereich oder freien Ende des Raumtrennsegmentes 2 aufgebracht wird.

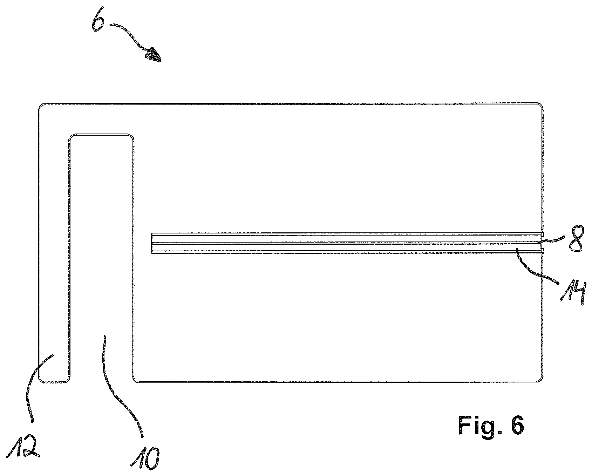

In dem auch in Figur 6 gezeigten Ausführungsbeispiel verläuft der erste schlitzförmige Ausschnitt 8 in der Ablage 6 im Wesentlichen mittig und erstreckt sich von einem Ende fast über die gesamte Länge der Ablage 6 zu dem anderen Ende, es ist jedoch alternativ erfindungsgemäß auch möglich, dass der schlitzförmige Ausschnitt 8 nicht mittig, sondern zu einer Seite hin versetzt verläuft, sodass die Ablage 6 asymmetrisch relativ zu dem Raumtrennsegment 2 angeordnet ist. Die gesamte Länge der Ablage 6 erstreckt sich nicht gesamt über die Breite des Raumtrennsegments 2; auch insoweit sind verschiedene Varianten möglich. Der zweite schlitzförmige Ausschnitt 10 ist an einem von dem Raumtrennsegment 2 abstehenden und über das Raumtrennsegment 2 im montierten Zustand hervorstehenden Endbereich der Ablage 6 ausgebildet und verläuft im Wesentlichen in einem rechten Winkel relativ zu dem ersten schlitzförmigen Ausschnitt 8; auch andere Winkel oder Formgestaltungen sind hier möglich. Es wäre auch denkbar, dass mehrere schlitzförmige Ausschnitte 10 in der Ablage 6 ausgebildet sind, um beispielsweise mehrere Handtücher herüber hängen zu können.

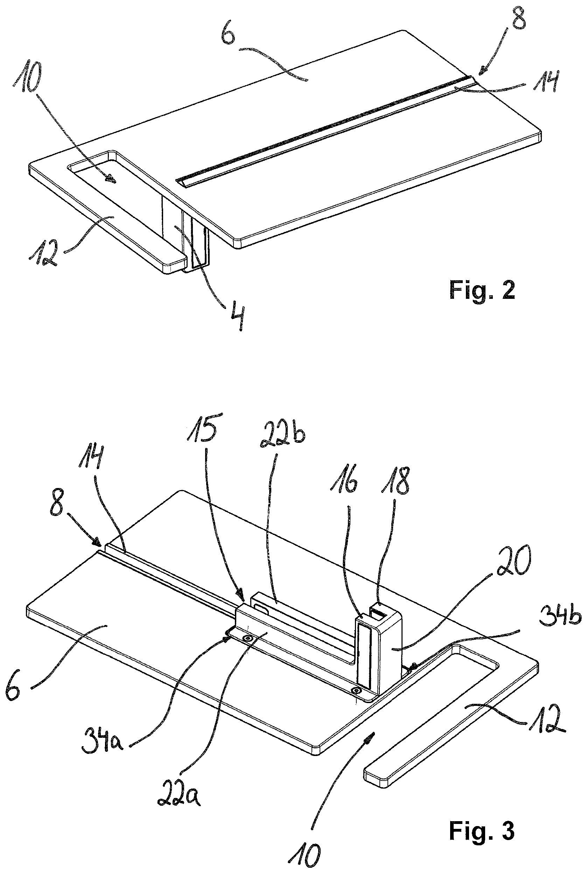

Die Figuren 2 und 3 zeigen jeweils eine perspektivische Ansicht einer mit der Ablage 6 verbundenen Klemmvorrichtung 4. Entlang seiner innenliegenden Kontur weist der erste schlitzförmige Ausschnitt 8 eine Dämpfungs- oder Schutzschicht 14 auf, die oberhalb der Ablage 6 eine Art Dichtungslippe ausbilden kann und vorzugsweise aus einem elastisch und/oder plastisch verformbaren Material, vorzugsweise Kunststoff ausgebildet ist; sie kann beispielsweise auf die Ablage 6 aufgeklebt sein.

Figur 3 zeigt unter anderem eine detailliertere Ansicht der Klemmvorrichtung 4. Es ist zu erkennen, dass die Klemmvorrichtung 4 im Wesentlichen L-förmig ausgebildet und einen Befestigungsabschnitt 15 zum Befestigen von Ablage 6 und Klemmvorrichtung 4 aneinander und einen ersten Klemmabschnitt 16 und einen zweiten Klemmabschnitt 18 aufweist, mit deren Hilfe zusammen mit weiteren Bauteilen die Klemmkraft zum klemmenden Befestigen der Ablage 6 an dem Raumtrennsegment 2 aufgebracht werden kann. Der erste und der zweite Klemmabschnitt 16, 18 sind durch einen Verbindungsabschnitt 20 miteinander verbunden, wobei der Verbindungsabschnitt 20 neben dem Zweck einer Klemmkraftübertragung von dem ersten zu dem zweiten Klemmabschnitt 16, 18 ebenfalls als Anschlag für das Raumtrennsegment 2 bei der Montage der Klemmvorrichtung 4 dient.

Der Befestigungsabschnitt 15 der Klemmvorrichtung 4 weist zwei beabstandete Schenkel 22a und 22b auf, zwischen denen das Raumtrennsegment 2 im montierten Zustand angeordnet ist. Beide Schenkel 22a und 22b des Befestigungsabschnitts 15 weisen jeweils einen flanschartigen Vorsprung auf, der dazu dient, die Ablage 6 mittels einer Schraubverbindung an die Klemmvorrichtung 4 zu befestigen. Zu diesem Zweck werden Schrauben durch in den flanschartigen Vorsprüngen ausgebildeten Bohrungen hindurchgesteckt und in die Ablage 6 eingeschraubt. Vorzugsweise werden mindestens vier Schrauben verwendet. Der Befestigungsabschnitt 15 ist im montierten Zustand vorzugsweise an der Unterseite der Ablage 6 und vorzugsweise wenigstens teilweise innerhalb einer an der Unterseite der Ablage 6 ausgebildeten Ausnehmungen 34a und 34b flächenbündig angeordnet. Die Ablage 6 zeigt an ihrer Unterseite zwei Ausnehmungen 34a und 34b, wobei die Schenkel 22a und 22b des Befestigungsabschnitts 15 der Klemmvorrichtung 4 jeweils einen flanschartigen Vorsprung aufweisen, der in eine jeweilige Ausnehmung 34a und 34b der Ablage 6 einsetzbar ist.

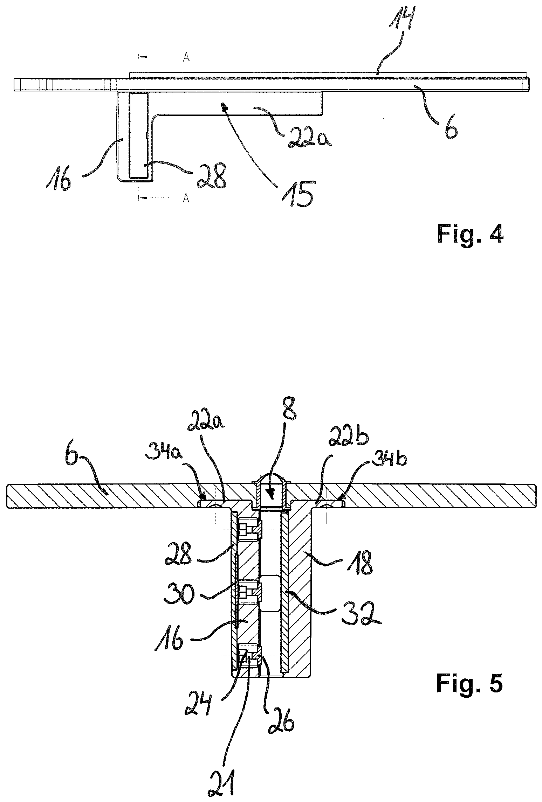

Figur 4 zeigt eine Seitenansicht einer erfindungsgemäßen an eine Klemmvorrichtung 4 befestigte Ablage 6. Es ist zu erkennen, dass die Anordnung des ersten und zweiten Klemmabschnitts 16, 18 zu dem Befestigungsabschnitt 15 im Wesentlichen rechtwinklig ausgebildet ist.

Figur 5 zeigt eine Schnittdarstellung einer erfindungsgemäßen an eine Klemmvorrichtung 4 befestigte Ablage 6. Es ist zu erkennen, dass der erste Klemmabschnitt 16 beabstandet zu dem zweiten Klemmabschnitt 18 angeordnet ist, mindestens entsprechend der Dicke des Raumtrennsegmentes 2. In diesem bevorzugten Ausführungsbeispiel weist der erste Klemmabschnitt 16 drei Klemmmittel 24 auf. Diese Klemmmittel 24 umfassen mindestens eine Schraube oder einen Gewindestift 21 und ein jeweiliges scheibenförmiges druckstabiles Kontaktelement 26, vorzugsweise hoher mechanischer Festigkeit, welches mit dem Gewindestift 21 an einem Ende verbunden ist. In diesem speziellen Ausführungsbeispiel besteht das Kontaktelement 26 aus Polysulfon (PSU), wobei auch Materialien mit ähnlichen druckstabilen Eigenschaften eingesetzt werden können. Die Schrauben oder Gewindestifte 21 sind innerhalb von mit einem Innengewinde ausgebildeten Bohrungen angeordnet, welche in dem Klemmabschnitt 16 ausgebildet sind. Im Ausgangsbeispiel sind drei Gewindestifte 21 und entsprechende Bohrungen vorgesehen, die Zahl kann aber ohne weiteres variiert werden. Das Kontaktelement 26 stellt im montierten Zustand der Klemmvorrichtung 4 eine Verbindung zwischen dem Gewindestift 21 und dem Raumtrennsegment 2 her zur Übertragung der Klemmkraft. Aus ästhetischen Gründen und um die Klemmmittel 24 vor äußeren Einflüssen zu schützen, ist an dem ersten Klemmabschnitt 16 auf den Klemmmitteln 24 eine Abdeckung 28 mit einem Klebeband 30 befestigt.

Gegenüberliegend dazu ist an dem zweiten Klemmabschnitt 18 eine Schutzschicht 32 angeordnet, vorzugsweise aufgeklebt, welche im montierten Zustand der Klemmvorrichtung 4 eine Verbindung zwischen dem zweiten Klemmabschnitt 18 und dem Raumtrennsegment 2 herstellt. Die Schutzschicht 32 besteht vorzugsweise aus einem reibungserhöhenden Material. In diesem speziellen Ausführungsbeispiel besteht die Schutzschicht 32 aus Polyvinylchlorid (PVC), wobei sowohl Hart- als auch Weich-PVC verwendet werden kann, wobei auch Materialien mit ähnlichen, insbesondere spannungsspitzenreduzierenden Eigenschaften einsetzbar sind.

Entlang der Innenseite des ersten schlitzförmigen Ausschnitts 8 der Ablage 6 ist die Schutzschicht 14 angeordnet. Die Schutzschicht 14 besteht aus einem elastischen, vorzugsweise gummiähnlichen Material. In diesem speziellen Ausführungsbeispiel besteht die Schutzschicht 14 aus Ethylenvinylacetat (EVA), es ist aber auch denkbar, für die Schutzschicht 14 Materialien mit ähnlichen schlag-, stoß- und vibrationsdämpfenden Eigenschaften zu verwenden, die vorzugsweise auch eine Reibungserhöhung an der im montierten Zustand erzeugten Kontaktfläche zwischen Ablage 6 und Raumtrennsegment 2 bewirkt.

## Patentansprüche

1. Raumtrennvorrichtung (1), insbesondere Duschabtrennung, mit
einem Raumtrennsegment (2),
einer mit dem Raumtrennsegment (2) koppelbaren Ablage (6), und
einer Klemmvorrichtung (4) zum Herstellen einer kraftschlüssigen Kopplung zwischen Raumtrennsegment (2) und Ablage (6), die zum Einstellen einer Position der Ablage (6) eingerichtet ist,
**dadurch gekennzeichnet, dass**
die Ablage (6) einen schlitzförmigen Ausschnitt (8) aufweist, welcher dazu eingerichtet ist, das Raumtrennsegment (2) aufzunehmen, derart, dass die Ablage (6) auf beiden Seiten der Raumtrennvorrichtung (1) genutzt werden kann und ein Verkippen der Ablage (6) verhindert wird und die Position der Ablage (6) in Bezug auf die Höhe am Raumtrennsegment (2) durch die Klemmvorrichtung (4) veränderbar ist.

2. Vorrichtung nach Anspruch 1,
**dadurch gekennzeichnet, dass** der schlitzförmige Ausschnitt (8) mindestens teilweise entlang seiner innenliegenden Kontur eine Schutzschicht (14) aufweist, die im montierten Zustand in Kontakt mit dem Raumtrennsegment (2) steht.

3. Vorrichtung nach Anspruch 2,
**dadurch gekennzeichnet, dass** die Schutzschicht (14) aus einem elastischen, vorzugsweise gummiähnlichen Material besteht.

4. Vorrichtung nach Anspruch 1,
**dadurch gekennzeichnet, dass** die Klemmvorrichtung (4) einen ersten Klemmabschnitt (16) und beabstandet dazu einen zweiten Klemmabschnitt (18) aufweist, die einen solchen Abstand zueinander aufweisen, dass das Raumtrennsegment (2) in den Zwischenraum zwischen den ersten und zweiten Klemmabschnitt (16, 18) einführbar ist, und
benachbart zu dem ersten und dem zweiten Klemmabschnitt (16, 18) ein Befestigungsabschnitt (15) zum Befestigen der Klemmvorrichtung (4) an der Ablage (6) vorgesehen ist.

5. Vorrichtung nach Anspruch 4,
**dadurch gekennzeichnet, dass** der erste Klemmabschnitt (16) und der zweite Klemmabschnitt (18) mittels eines Verbindungsabschnitts (20) miteinander verbunden sind, wobei vorzugsweise der Verbindungsabschnitt (20) einen Anschlag für das Raumtrennsegment (2) bildet.

6. Vorrichtung nach Anspruch 4 oder 5,
**dadurch gekennzeichnet, dass** die Klemmvorrichtung (4) - im montierten Zustand - an der Unterseite der Ablage (6) mittels des Befestigungsabschnitts (15) befestigt ist.

7. Vorrichtung nach mindestens einem der Ansprüche 4 bis 6,
**dadurch gekennzeichnet, dass** die Ablage (6) an ihrer Unterseite mindestens eine Ausnehmung (34a, 34b) aufweist, in die der der Befestigungsabschnitt (15) der Klemmvorrichtung (4) teilweise einsetzbar ist.

8. Vorrichtung nach mindestens einem der Ansprüche 4 bis 7,
**dadurch gekennzeichnet, dass** der Befestigungsabschnitt (15) zwei beabstandete Schenkel (22a, 22b) aufweist, zwischen denen das Raumtrennsegment (2) im montierten Zustand angeordnet ist, und jeder Schenkel (22a, 22b) des Befestigungsabschnitts (15) einen flanschartigen Vorsprung aufweist, der mittels Schraubverbindung an der Ablage (6) befestigbar ist und wenigstens teilweise, vorzugsweise vollständig in die Ausnehmung (34a, 34b) der Ablage (6) einsetzbar ist.

9. Vorrichtung nach mindestens einem der Ansprüche 4 bis 8,
**dadurch gekennzeichnet, dass** der Befestigungsabschnitt (15) und der erste und zweite Klemmabschnitt (16, 18) im Wesentlichen rechtwinklig zueinander angeordnet sind.

10. Vorrichtung nach mindestens einem der vorstehenden Ansprüche,
**dadurch gekennzeichnet, dass** die Ablage (6) als vorzugsweise einstückiges Brett ausgebildet ist.

11. Vorrichtung nach mindestens einem der vorstehenden Ansprüche,
**dadurch gekennzeichnet, dass** der schlitzförmige Ausschnitt (8) ein erster schlitzförmiger Ausschnitt (8) ist und die Ablage (6) einen weiteren zweiten schlitzförmigen Ausschnitt (10) aufweist, sodass an der Ablage (6) ein Haltesegment (12) ausbildet ist, welches vorzugsweise als Handtuchhalter eingerichtet ist.

12. Vorrichtung nach Anspruch 11,
**dadurch gekennzeichnet, dass** der erste schlitzförmige Ausschnitt (8) und der zweite schlitzförmige Ausschnitt (10) in einem Winkel zueinander, vorzugsweise in einem Bereich zwischen 80 und 110°, besonders bevorzugt in einem Winkel von etwa 90° zueinander angeordnet sind.

13. Vorrichtung nach mindestens einem der vorstehenden Ansprüche,
**dadurch gekennzeichnet, dass** mindestens ein Klemmabschnitt (16, 18) mindestens ein Klemmmittel (24) zum Aufbringen einer Klemmkraft auf das Raumtrennsegment (2) aufweist, welches vorzugsweise als Schraube ausgebildet ist und mit einem an dem Klemmabschnitt (16, 18) ausgebildeten Gewinde zusammenwirkt, und
das Klemmmittel (24) ein vorzugsweise scheibenförmiges druckstabiles Kontaktelement (26) aufweist, welches mit dem Raumtrennsegment (2) im montierten Zustand in Kontakt steht.

14. Vorrichtung nach Anspruch 13,
**gekennzeichnet durch** eine an einem Klemmabschnitt (16, 18) befestigte Abdeckung (28) zum Abschirmen der Klemmmittel (24) vor äußeren Einflüssen.

15. Vorrichtung nach mindestens einem der vorstehenden Ansprüche,
**dadurch gekennzeichnet, dass** an mindestens einem Klemmabschnitt (16, 18) eine Schutzschicht (32) angeordnet ist, welche im montierten Zustand mit dem Raumtrennsegment (2) in Kontakt steht und vorzugsweise aus einem reibungserhöhenden Material besteht.

## Claims

1. Room partitioning device (1) for a shower partition in the bathroom and sanitary area, having
- a room partitioning segment (2),
- a shelf (6) that can be coupled to the room partitioning segment (2), and
- a clamping device (4) for establishing a force-locking coupling between the partitioning segment (2) and the shelf (6), which is configured for adjusting a position of the shelf (6),
**characterized in that** the shelf (6) has a slot-shaped cutout (8) which is configured to receive the room partitioning segment (2), such that the shelf (6) can be used on both sides of the room partitioning device (1) and tilting of the shelf (6) is prevented and the position of the shelf (6) in relation to the height on the room partitioning segment (2) is changeable by the clamping device (4).

2. Device according to claim 1,
**characterized in that** the slot-shaped cutout (8) has, at least partially along its inner contour, a protective layer (14) which, in the mounted state, is in contact with the room partitioning segment (2).

3. Device according to claim 2,
**characterized in that** the protective layer (14) consists of an elastic, preferably rubber-like material.

4. Device according to claim 1,
**characterized in that** the clamping device (4) has a first clamping section (16) and, at a distance from it, a second clamping section (18), which are at such a distance from each other that the partitioning segment (2) can be inserted between the first and second clamping sections (16, 18).

5. Device according to claim 4,
**characterized in that** the first clamping section (16) and the second clamping section (18) are connected to one another by means of a connecting section (20), wherein the connecting section (20) preferably forms a stop for the room partitioning segment (2).

6. Device according to claim 4 or 5,
**characterized in that** the clamping device (4) is attached to the underside of the shelf (6) in the mounted state .

7. Device according to any one of the claims 4 to 6,
**characterized in that** the underside of the shelf (6) has at least one recess (34a, 34b) into which the fastening section (15) of the clamping device (4) can be partially inserted.

8. Device according to any one of the claims 4 to 7,
**characterized in that** fastening section (15) has two spaced legs (22 a, 22b) between which the room partitioning segment (2) is arranged in the mounted state, wherein each leg (22a, 22b) of the fastening section (15) has a flange-like projection that can be fastened to the shelf (6) by means of a screw connection and can be at least partially, preferably completely, inserted into the recess (34a, 34b) of the shelf (6).

9. Device according to any one of the claims 4 to 8,
**characterized in that** the fastening section (15) and the first and second clamping sections (16, 18) are arranged essentially at right angles to one another.

10. Device according to at least one of the preceding claims,
**characterized in that** the shelf (6) is configured as a one-piece board.

11. Device according to at least one of the preceding claims,
**characterized in that** the slot-shaped cutout (8) is a first slot-shaped cutout (8) and the shelf (6) has a second slot-shaped cutout (10) which forms a holding segment (12) on the shelf (6) which is preferably configured as a towel rail.

12. Device according to claim 11,
**characterized in that** the first slot-shaped cutout (8) and the second slot-shaped cutout (10) are arranged at an angle in a range between 80 and 110 with respect to each other.

13. Device according to at least one of the preceding claims,
**characterized in that** at least one clamping section (16, 18) has at least one clamping means (24) for applying a clamping force to the room partitioning segment (2), which is preferably configured as a screw and interacts with a thread configured on the clamping section (16, 18), and
**in that** the clamping means (24) comprises a disc-shaped pressure-stable contact element (26) which is in contact with the room partitioning segment (2) in the mounted state.

14. Device according to claim 13,
**characterized by** a cover (28) attached to a clamping section (16, 18) for shielding the clamping means (24) from external influences.

15. Device according to at least one of the preceding claims,
**characterized in that** a protective layer (32) is arranged on at least one clamping section (16, 18) which is in contact with the room partitioning segment (2) in the assembled state and consists of a friction-enhancing material.

## Revendications

1. Dispositif de séparation d'espace (1), en particulier séparation de douche, avec
un segment de séparation d'espace (2),
un support (6) pouvant être couplé au segment de séparation d'espace (2), et
un dispositif de serrage (4) pour établir un couplage à force entre le segment de séparation d'espace (2) et le support (6), qui est conçu pour régler une position du support (6),
**caractérisé en ce que**
le support (6) présente une découpe en forme de fente (8), laquelle est conçue pour accueillir le segment de séparation d'espace (2), de sorte que le support (6) puisse être utilisé des deux côtés du dispositif de séparation d'espace (1) et qu'un basculement du support (6) soit empêché et la position du support (6) par rapport à la hauteur du segment de séparation d'espace (2) puisse être modifiée à l'aide du dispositif de serrage (4).

2. Dispositif selon la revendication 1,
**caractérisé en ce que** la découpe en forme de fente (8) présente au moins partiellement, le long de son contour intérieur, une couche de protection (14) qui est en contact avec le segment de séparation d'espace (2) dans l'état monté.

3. Dispositif selon la revendication 2,
**caractérisé en ce que** la couche de protection (14) est constituée d'un matériau élastique, de préférence similaire au caoutchouc.

4. Dispositif selon la revendication 1,
**caractérisé en ce que** le dispositif de serrage (4) présente une première section de serrage (16) et, à distance de celle-ci, une deuxième section de serrage (18), qui présentent l'une par rapport à l'autre une distance telle que le segment de séparation d'espace (2) puisse être introduit dans l'espace intermédiaire entre les première et deuxième sections de serrage (16, 18), et
une section de fixation (15) est prévue au voisinage de la première et de la deuxième section de serrage (16, 18) pour fixer le dispositif de serrage (4) sur le support (6).

5. Dispositif selon la revendication 4,
**caractérisé en ce que** la première section de serrage (16) et la deuxième section de serrage (18) sont reliées entre elles au moyen d'une section de liaison (20), dans lequel la section de liaison (20) forme de préférence une butée pour le segment de séparation d'espace (2).

6. Dispositif selon la revendication 4 ou 5,
**caractérisé en ce que** le dispositif de serrage (4) est fixé - dans l'état monté - sur la face inférieure du support (6) au moyen de la section de fixation (15).

7. Dispositif selon au moins l'une quelconque des revendications 4 à 6,
**caractérisé en ce que** le support (6) présente, sur sa face inférieure, au moins un évidement (34a, 34b) dans lequel la la section de fixation (15) du dispositif de serrage (4) peut être partiellement insérée.

8. Dispositif selon au moins l'une quelconque des revendications 4 à 7,
**caractérisé en ce que** la section de fixation (15) présente deux branches (22a, 22b) espacées entre lesquelles le segment de séparation d'espace (2) est disposé dans l'état monté, et chaque branche (22a, 22b) de la section de fixation (15) présente une saillie en forme de bride qui peut être fixée sur le support (6) au moyen d'un raccord vissé et s'insère au moins partiellement, de préférence complètement, dans l'évidement (34a, 34b) du support (6).

9. Dispositif selon au moins l'une quelconque des revendications 4 à 8,
**caractérisé en ce que** la section de fixation (15) et les première et deuxième sections de serrage (16, 18) sont disposées sensiblement perpendiculairement l'une par rapport à l'autre.

10. Dispositif selon au moins l'une quelconque des revendications précédentes,
**caractérisé en ce que** le support (6) est de préférence réalisé en tant que planche monobloc.

11. Dispositif selon au moins l'une quelconque des revendications précédentes,
**caractérisé en ce que** la découpe en forme de fente (8) est une première découpe en forme de fente (8) et le support (6) présente une autre deuxième découpe en forme de fente (10), de sorte qu'un segment de maintien (12), lequel est de préférence conçu en tant que porte-serviettes, est réalisé sur le support (6).

12. Dispositif selon la revendication 11,
**caractérisé en ce que** la première découpe en forme de fente (8) et la deuxième découpe en forme de fente (10) sont disposées à un angle l'une par rapport à l'autre, de préférence dans une plage comprise entre 80 et 110°, de manière particulièrement préférée à un angle d'environ 90° l'une par rapport à l'autre.

13. Dispositif selon au moins l'une quelconque des revendications précédentes,
**caractérisé en ce qu'**au moins une section de serrage (16, 18) présente au moins un moyen de serrage (24) pour appliquer une force de serrage sur le segment de séparation d'espace (2), lequel est de préférence réalisé en tant que vis et interagit avec un filetage réalisé sur la section de serrage (16, 18), et
le moyen de serrage (24) présente un élément de contact (26) stable sous pression de préférence en forme de disque, lequel est en contact avec le segment de séparation d'espace (2) dans l'état monté.

14. Dispositif selon la revendication 13,
**caractérisé par** un cache (28) fixé sur une section de serrage (16, 18) pour protéger les moyens de serrage (24) des influences extérieures.

15. Dispositif selon au moins l'une quelconque des revendications précédentes,
**caractérisé en ce qu'**une couche de protection (32), laquelle est en contact avec le segment de séparation d'espace (2) dans l'état monté et est de préférence constituée d'un matériau augmentant la friction, est disposée sur au moins une section de serrage (16, 18).
